# EUROPEAN PATENT APPLICATION

(11) **EP 1 310 538 A1**
(43) Date of publication of application: **14.05.2003**
(21) Application number: 01921878.3
(22) Date of filing: 18.04.2001
(51) Int. Cl.: C09J 7/02

(54) **PRESSURE SENSITIVE ADHESIVE SHEET CAPABLE OF UNDERGOING REPEATED PRESSURE SENSITIVE ADHESION/RELEASE**

(30) Priority: 19.04.2000 JP 2000118212
(71) Applicant: Plast Corporation, Chiyoda-ku, Tokyo 102-0073 (JP); Inagaki, Hiromichi, Inuyama-shi, Aichi 484-0049 (JP)
(72) Inventor: INAGAKI, Hiromichi, Inuyama-shi, Aichi 484-0049 (JP); TAKAHASHI, Sakaru, c/o Plast Corporation, Chiyoda-ku, Tokyo 102-0073 (JP)
(74) Representative: Teipel, Susanne, Dr.
(86) International application number: JP0103315
(87) International publication number: WO01079373

(57) **Abstract**

An adhesive sheet capable of repeated adhesion and release is provided. A non-adhesive protective material 3 layer is provided to the surface of a substrate 1 coated with an adhesive agent 2 so that the spaces obtained by multiplying the surface area of adhesive sections by the thickness (distance) of the protective material are adjusted so that the adhesive sheet will be capable of repeated adhesion and release.

## Description

### TECHNICAL FIELD

This invention relates to an adhesive sheet having an adhesive face capable of repeated adhesion and release which can be used in a wide range of applications such as construction materials or packaging materials for foods and sundries.

### BACKGROUND ART

In the past, a tape or other surface coated with an adhesive was entirely covered in one way or another with a peelable release sheet, and this release sheet was then removed immediately prior to sticking the adhesive product to the required surface of an article.

For instance, a cellophane tape has a structure in which one side of a regenerated cellulose film is coated with an adhesive, the opposite side is coated with a release agent, and this product is cut to a narrow width and wound in a roll so that the face side coated with the adhesive overlaps the face side coated with the release agent and serves as a covering. The adhesive is exposed and tacky on the two end faces of the roll, but the outer surface of the roll can be handled without sticking to anything that touches the face side coated with the release agent. When needed, the outer end of the wound tape is peeled away and pulled out, then cut off for use.

The opening of a bag is often coated with an adhesive and then covered with a protective film to produce an easy resealable packaging bag. The bag is filled with its contents, the protective film is removed, and the face side coated with the adhesive is stuck to its intended location to seal the bag. When the contents are put in and taken out of this packaging bag, the bag can be easily opened and resealed. However, once the protective film has been removed, the face side coated with the adhesive remains sticky.

The surface coated with the adhesive has powerful adhesive strength, but this strength is lost if the surface touches an oil, a nonvolatile liquid, or a solution containing solids. For example, if this surface is touched with the fingertips, the oils on the hand adhere to the surface and markedly diminish its adhesive strength. If the surface is touched by water or a solvent such as an alcohol, the adhesive strength will be restored once the liquid evaporates away, but if it is touched by a solid in the form of a powder or granules, the solid will cling tightly and be difficult to remove, and this greatly lowers the adhesive strength of the surface.

Methods that have been used to weaken the adhesive strength of the adhesive include adding a synthetic resin or an inorganic material to the adhesive, and applying the adhesive in dots. Another way is to process the solid surface to be brought into contact with the adhesive surface so as to provide a dotted pattern thereon, thereby reducing the contact surface area thereof, or to apply a release agent, so that the adhesive surface may be made mechanically easier to handle.

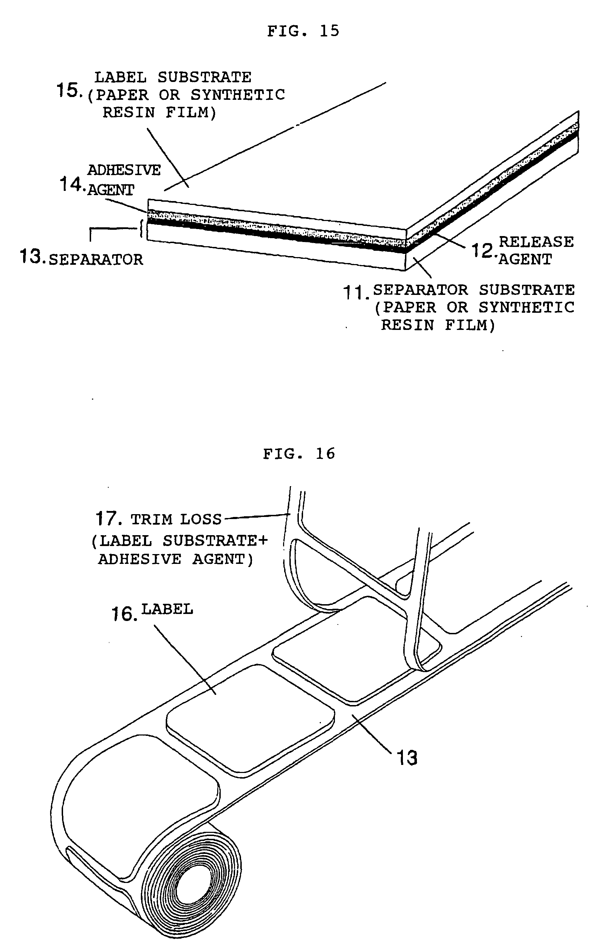

Adhesive labels are commonly used as a means of conveying information by being printed with letters or figures as well as tags. Generally, as shown in FIG. 15, such labels have a structure in which a separator 13 (made of paper or a synthetic resin film) is prepared by coating a separator substrate 11 with a release agent 12, this separator 13 is coated with an adhesive 14, and a sheet of paper or a synthetic resin film that serves as a label substrate 15 is applied.

The surface is printed and half-cut (punching in which the blade cuts down through part of the separator) into the required label shape, the unnecessary border is peeled away, and the strip is wound as shown in Fig. 16, with labels 16 coated with an adhesive arranged in a continuous line and spaced apart at regular intervals on the separator 13. The separator 13 is integrated as a protective covering material with the labels 16, and is discarded after the labels 16 are peeled off for adhesion. A recyclable separator has been developed, in which the separator is made from paper and water-soluble poval (polyvinyl alcohol) is used for the release agent 12, but nearly all of this is discarded as refuse along with the trim loss 17.

### DISCLOSURE OF THE INVENTION

The present invention is an adhesive sheet capable of repeated adhesion and release, and provides an adhesive sheet that will not stick to the fingers during peeling, and affords easy mechanical handling when attached to a packaging bag or the like.

The present invention is an adhesive sheet capable of repeated adhesion and release, wherein a non-adhesive protective material layer is provided to the substrate surface on the side coated with an adhesive agent so that spaces obtained by multiplying the surface area of the adhesive sections by the thickness of the protective material layer are regulated.

The above-mentioned protective material is a non-adhesive material, and is used in the form of a mesh or lines. Lines may be laid out both horizontally and vertically to create an overall mesh shape, or they may be arranged in just one direction. In any case, the cross sectional shape of the structural units can be circular, elliptical, triangular, square, polygonal, or a combination of these. A flattened shape or other shape can also be used, and any appropriate shape can be determined as needed. The protective material in the form of dots may also be arranged. If the protective material is in the form of dots, the shape of each dot can be spherical, columnar, rectangular parallelepiped, conical, trapezoidal, or a combination of these.

This protective material is provided so as to regulate spaces obtained by multiplying the surface area of the adhesive-coated face by the thickness (distance) of the protective material that the adhesive surface does not come into direct contact with other adhesive surface or with the surface of another solid on which a liquid or a solid is present, such as a fingertip. This aspect will be termed a "partially covered adhesive face."

Meanwhile, the substrate coated with the adhesive agent is constituted of any one of a synthetic resin film, a regenerated cellulose film, a foamed synthetic resin, paper, cloth, wood, bamboo, metal, glass, ceramic, etc.

When one face side of the substrate is coated with an adhesive agent and a partially covered adhesive face is provided thereon, the face side that is not the partially covered adhesive face comes into contact with an object and is fixed to the object by heat sealing.

The substrate may also be coated on both sides with the adhesive agent, in which case the partially covered adhesive face may be on one or both sides. If it is on only one side, then the side that is not the partially covered adhesive face will be fixed to the object, and is therefore used as the side that does not need to undergo repeated adhesion and release.

If both sides of the substrate are coated with the adhesive agent, then tiny through holes can be made in the substrate so that the adhesive agent applied on one side will also ooze out onto the other side.

The substrate face side coated with the adhesive agent may also be colored. If the adhesive-coated surface is colored and further an article is colored with white or another color with hiding power, the color given on the adhesive-coated surface can be seen through the adhered article when the face side coated with the adhesive agent is press bonded. Such coloration allows the adhesion state to be confirmed.

The present invention is intended to be applied to the opening of a packaging bag, for instance, to allow repeated adhesion and release whenever necessary. To this end, the partially covered adhesive face will not adhere even if the protective material side merely touches another surface when the bag is opened. However, when pressure is applied from the back of the adhesive sections, the adhesive surfaces not covered with the protective material bend in toward the facing face of the solid, and adhere thereto in a dotted pattern. Conversely, when pressure is applied from the back of the solid face, this solid face bends in toward the adhesive sections not covered with the protective material, and adheres only to a limited surface area to form a dotted adhesion pattern, so peeling takes less force than if the entire adhesive-coated surface adheres to the facing solid face. Once peeled, the adhesive sections return to their original state of being lower than the protective material surface, and therefore do not adhere to other articles.

### BRIEF DESCRIPTION OF THE DRAWINGS

FIG. 1 is a perspective view of an example of the present invention, and FIG. 1(B) is a diagram of the function thereof.
FIG. 2 is a diagram of when an example of the present invention is placed on an article surface.
FIG. 3 is a diagram of the state when pressure is applied with a finger in FIG. 2.
FIG. 4 is an illustration of the state when peeling.
FIG. 5 is a diagram of when two partially covered adhesive faces are put together facing each other.
FIG. 6 is a diagram of the state when pressure is applied with a finger in FIG. 5.
FIG. 7 is a diagram of an example of coloration.
FIG. 8 is a diagram of the action when the example in FIG. 7 is pressed.
FIG. 9 is a diagram of an example of the manufacturing of an adhesive tape pertaining to the present invention.
FIG. 10 is a cross section of a midway step in the same manufacturing example.
FIG. 11 is a diagram of the final step in the same manufacturing example.
FIG. 12 is a diagram of an example of the application of the present invention to a packaging bag.

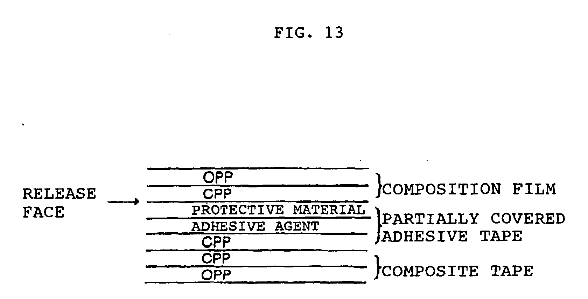

FIG. 13 is a diagram of the layer structure in an X-X cross section of FIG. 12.
FIG. 14 is a concept diagram of a tensile tester.
FIG. 15 is a diagram of the structure of a conventional adhesive label.
FIG. 16 is a diagram of a conventional adhesive label that has been half-cut.

### BEST MODE FOR CARRYING OUT THE INVENTION

The present invention will now be described in specific terms on the basis of the drawings.

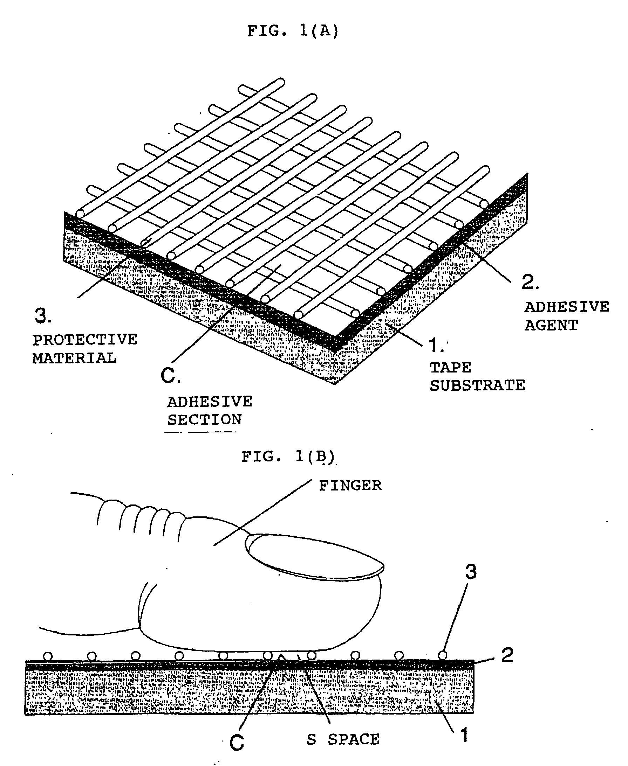

FIG. 1A is a perspective view of an example of the present invention in the form of a tape. The surface of a tape substrate 1 is coated with an adhesive 2, and a mesh-form protective material 3 is provided over this surface. Countless adhesive sections C are formed at the portions surrounded by the protective material 3. As shown in FIG. 1B, if a finger should touch this tape surface, the protective material 3 will maintain a space S between the finger and the adhesive surfaces C, so there will be no adhesion.

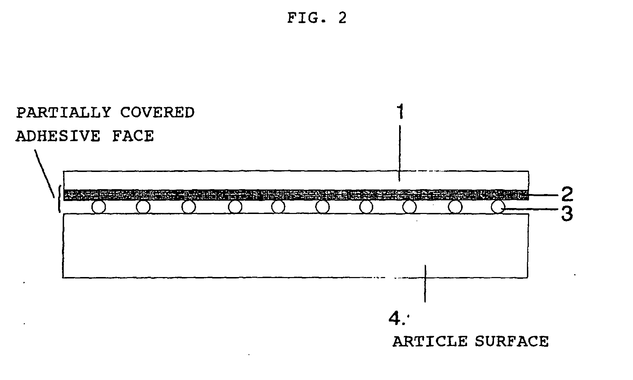

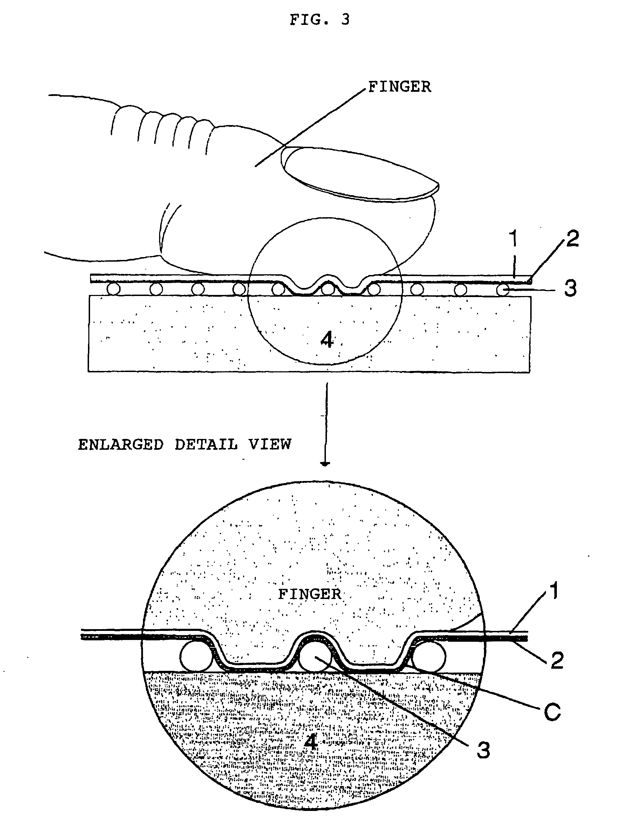

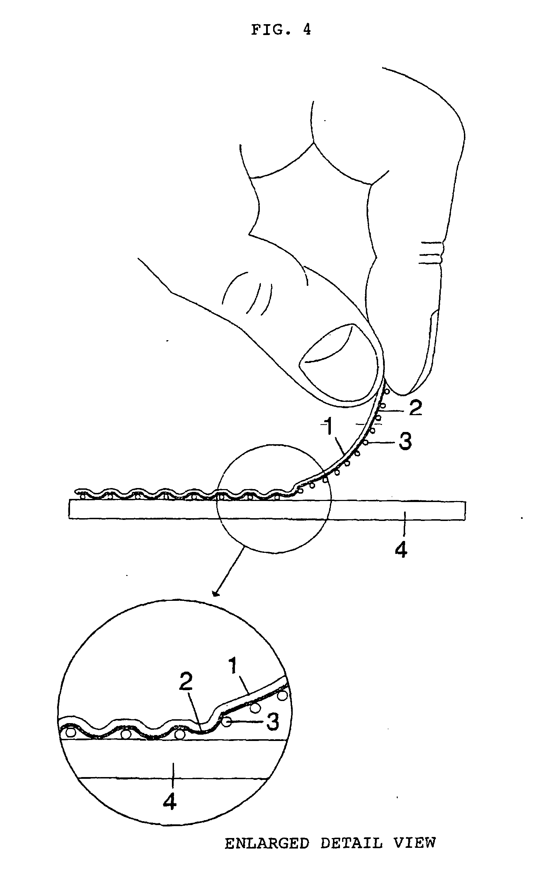

When this tape is placed over an article surface 4 as shown in FIG. 2, and pressure is applied with a finger or the like from the back of the partially covered adhesive face as shown in FIG. 3, the adhesive sections C of the adhesive agent 2, which are not covered by the protective material 3, will bend in toward the facing article surface 4 and adhere in the form of islands (dots). To peel away the adhering partially covered adhesive face, the end of the tape is gripped and peeled as shown in FIG. 4, and the tape can be peeled from the article surface 4 with less force than if the entire surface were adhesive. Once peeled, the elasticity of the adhesive sections causes them to return to their original locations down inside the protective material, and they will therefore not adhere if merely touched.

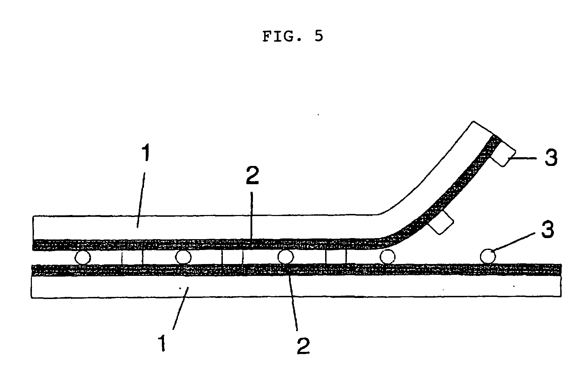

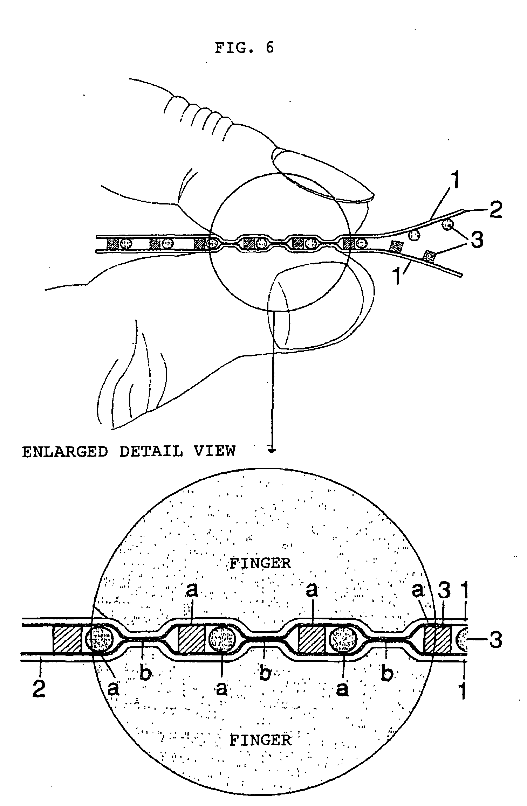

FIG. 5 is an illustration of placing a tape having a partially covered adhesive face over another tape with a partially covered adhesive face, with these sides facing each other. When pressure is applied from the outside as shown in FIG. 6, this results in portions *a* where the adhesive face adheres to the surface of the protective material 3, and portions *b* where the adhesive section bend inward and adhere. When the tapes are peeled apart they return to their original state, each reverting to the original partially covered adhesive face, and this makes re-adhesion possible. The adhesive force is strong at portions *b* where the adhesive surfaces adhere together, but the surface area at these portions is small, so peeling is still easy.

The larger are the adhesive sections C surrounded by the protective material (see FIG. 1), the greater is the adhesive strength, and the smaller they are, the lower is the adhesive strength. Thus, the adhesive strength to the surface of an article can be selected by adjusting the type and coating amount of the applied adhesive agent, the thickness of the protective material, and the size of the spaces.

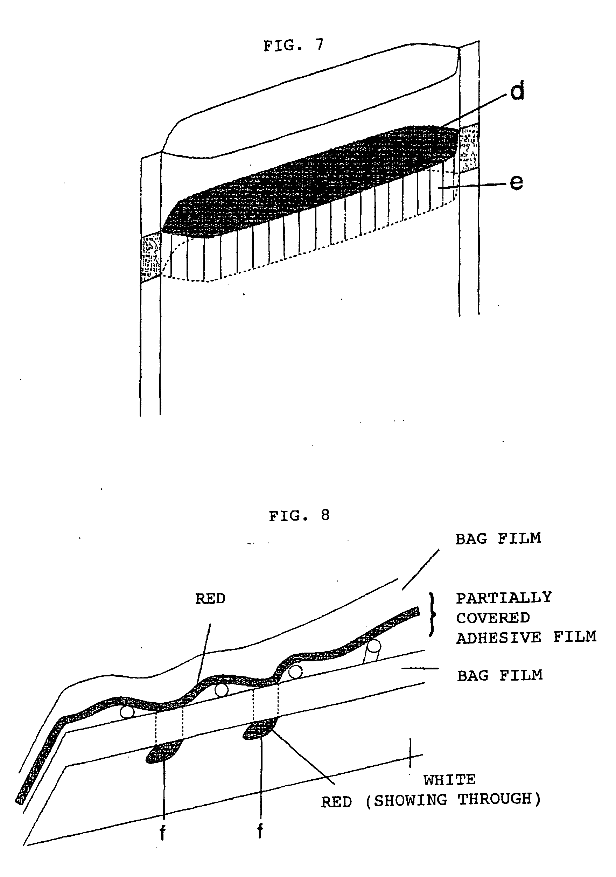

In FIG. 7, one or both sides of the opening in a packaging bag are equipped with a strip-shaped partially covered adhesive face according to the present invention as an easy-open, easy-seal device, and the film constituted of an adhesive agent or an adhesive agent-coated surface is colored red, for instance, with an ink, pigment, dye, etc., while the film constituted of an adhesive agent or an adhesive agent-coated surface of the strip-shaped partially covered adhesive face or the packaging bag film on the opposite side is colored white, for instance, with an ink, dye, pigment, or the like with weak hiding power. FIG. 7 is an example in which the partially covered adhesive face is on just one side, *d* is the partially covered adhesive face colored red, and *e* is the portion of the packaging bag film that has been coated with a strip of white ink.

If the adhesive agent of the partially covered adhesive face is not pressed closely against the bag film on the opposite side, the color will remain white when viewed from the *e* side, but when the partially covered adhesive face is firmly pressed on with a finger to apply pressure, the portions where the adhesive agent comes into contact appear as red dots against the white strip. If this pair of different colors are provided in the facing surfaces, it will be possible to tell from either side whether the packaging bag is open or completely sealed.

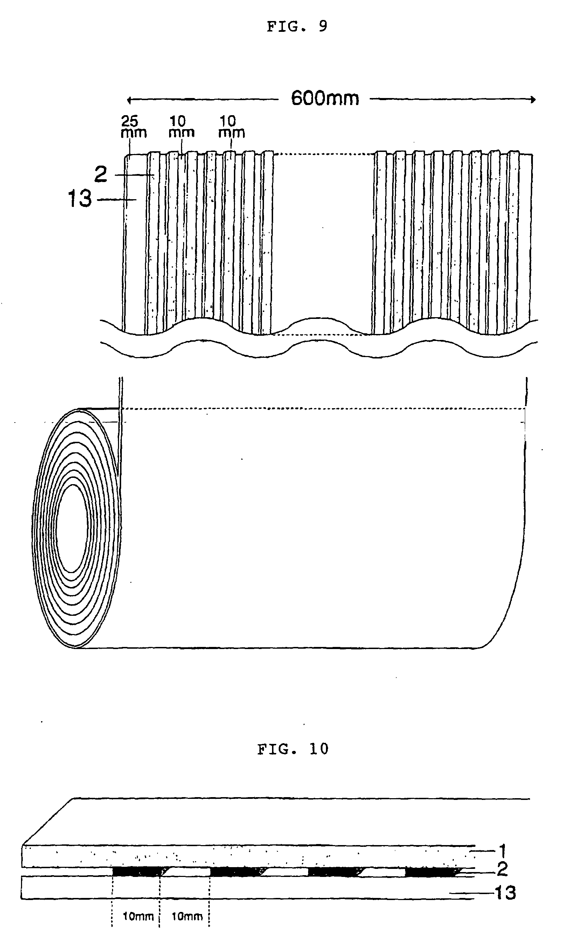

FIG. 8 illustrates an example in which the partially covered adhesive face is provided to just one side. In this example, *f* is the places where the red color of the adhesive agent of the partially covered adhesive face comes into contact with the face *e* and shows through.

Specific examples will now be described.

### Example 1 (Performance test of partially covered adhesive tape)

As a tape substrate CPP (cast polypropylene; 30 µ film KT made by Okura Kogyo) was coated with an adhesive agent (BPS-2411 made by Toyo Morton), over which a mesh-form non-adhesive protective material (Polyethylene Warifu SSS-T (16 g/m²) made by Nisseki Plasto) was laid to produce a partially covered adhesive face.

A number of conditions were established for the following categories 1 to 3 here.
1. Coating amount of adhesive agent:
   (1) 7.6 g/m², (2) 3.8 g/m², (3) 1.9 g/m²
2. Type of release face:
   (1) Release between the protective material 3 and the article surface 4 shown in FIG. 2
   (2) Release between the protective materials 3 shown in FIG. 5
3. Pre-pressing conditions for release sheet before release
   (1) Repeated passes under a 2 kg roller, followed by 20 minutes under a load of 20 g/cm²
   (2) Repeated passes under a 2 kg roller, followed by 7 days under a load of 20 g/cm²

When applying the above load to each test piece, 5 sheets of gauze (type 1, SF Cross brand made by Warabi Eizai, meets Japan Pharmacopoeia standards) were placed under the test piece. The reason for applying the load after first placing 5 sheets of gauze under the test piece was to reproduce as closely as possible the situation when pressure is lightly applied with a finger to the partially covered adhesive face.

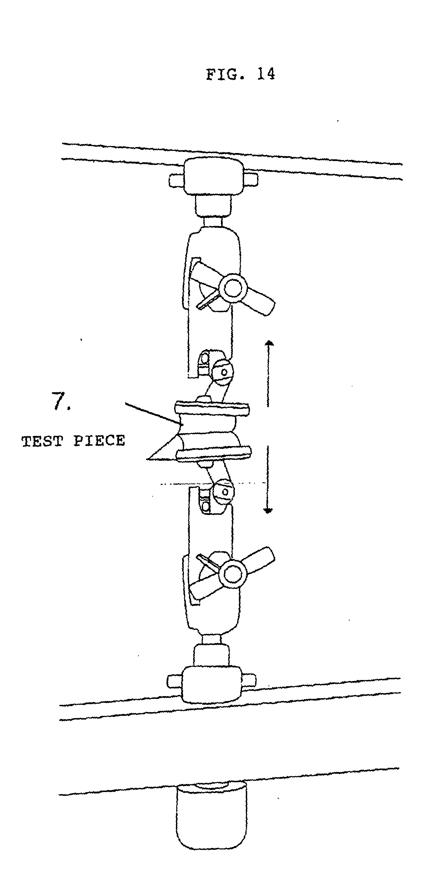

In measuring the peel strength, a test piece 7 (CPP coated over the entire surface with an adhesive agent, measuring 50 × 120 mm) was clamped in the tensile tester shown in FIG. 14 and pulled at a measurement speed of 0.3 m/min and a pulling angle of 180 degrees.

The reason for setting the width of the test piece 7 to 50 mm is that when this partially covered adhesive tape is furnished to an actual packaging bag, the width of the opening that is opened with the fingers when the bag is reopened after being sealed is generally about 50 mm. Specifically, if the peel strength is measured for a test piece of this width, the measurement conditions will approximate those of the environment in which a bag is generally used.

Measurements under the above conditions yielded the following peel strength measurement values (units: g).

**Table 1**

| A. When the release face is as in 2-(1) | | | |
|---|---|---|---|
| Load/coating amount | 1-(1) | 1-(2) | 1-(3) |
| 3-(1) | 243.2 | 130.5 | 61.8 |
| 3-(2) | 248.5 | 119.6 | 73.4 |

**Table 2**

| B. When the release face is as in 2-(2) | | | |
|---|---|---|---|
| Load/coating amount | 1-(1) | 1-(2) | 1-(3) |
| 3-(1) | 359.0 | 202.3 | 95.1 |
| 3-(2) | 362.1 | 196.8 | 126.3 |

The above test results revealed the following.
(1) Peel strength rises along with the coating amount of adhesive agent. Therefore, the peel strength can be kept to the target value by adjusting the coating amount of adhesive agent coating.
(2) Compared to test A between a protective material and another article surface, the adhesive strength is generally higher with test B between protective materials. For instance, with a resealable plastic bag that requires quite strong adhesion, the inventive partially covered adhesive tapes can be affixed by heat sealing to both sides of the bag opening, and the protective materials can then be stuck together.
(3) As is clear from a comparison of pressing conditions 3-(1) and 3-(2), the peel strength of the adhesive tape of the present invention undergoes substantially no change over time, instead maintaining a stable strength.
(4) The heat seal strength usually required of a candy bag is 300 to 400 g, and the peel strength should be no higher than this in order to allow the bag to be properly resealed and reopened. Therefore, the adhesive agent used in the above tests is an example of one with which a suitable peel strength can be set by adjustment of the coating amount.

### Example 2 (Manufacture of partially covered adhesive tape)

As shown in FIG. 9, a separator 13 with a width of 600 mm was coated on its surface with a release agent and wound in a roll of a specific length. An adhesive 2 was applied over this release agent side in stripes 10 mm wide and 10 mm apart. A polyethylene film 560 mm wide and 30 µ thick was applied as a tape substrate 1 over the face side coated with this adhesive agent 2, and wound. The cross sectional layers here had the structure shown in FIG. 10.

This roll having the structure shown in FIG. 10 was unrolled, and while the separator 13 was removed, a protective material 3 with a width of 560 mm was placed over the surface of the adhesive 2 and wound. As a result, the partially covered adhesive face shown in FIG. 2 and having a polyethylene film as the tape substrate 1 was formed.

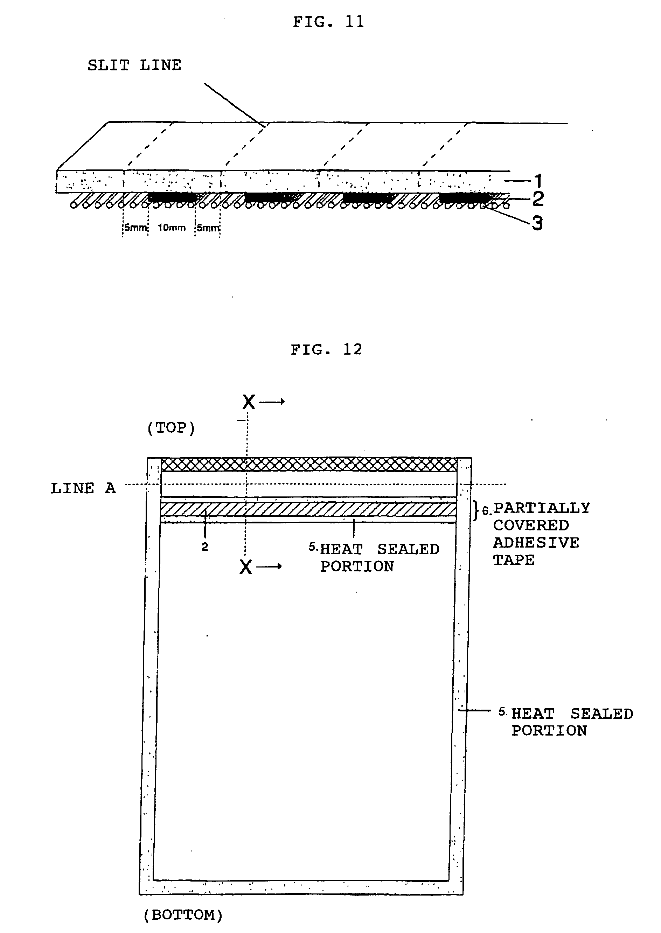

The rolled partially covered adhesive face with a width of 560 mm was cut along the slit lines shown in FIG. 11 to manufacture partially covered adhesive tapes with a width of 20 mm (an adhesive layer with a width of 10 mm plus a non-adhesive layer with a width of 5 mm on either side).

### Example 3 (Use of the partially covered adhesive tape)

A CPP (cast polypropylene) film 30 µ thick was laminated with an OPP (biaxially oriented polypropylene) film 20 µ thick to provide a composite film with an OPP/CPP structure. The partially covered adhesive tape 6 shown in FIG. 12, which had a width of 20 mm, was sandwiched between the composite films, and was heat sealed to fasten it to the CPP side of the composite films. The composite films having the partially covered adhesive tape therebetween were heat sealed at their three sides (the bottom and the two lateral sides) with the CPP side on the inside to form a bag, the result of which was a three-sided bag equipped with a partially covered adhesive tape. The X-X cross section of this tape portion had the structure shown in FIG. 12.

A three-sided bag such as this is filled from the top with candy or other such contents, after which the top is heat sealed as in FIG. 12, and after complete sealing the bags are distributed among ordinary consumers. When the package contents are put in, this partially covered adhesive tape is not sticky on its surface thanks to the function of the protective material, so no problems are encountered in the filling process.

After the ordinary consumer who purchases this product opens the bag at line A, he or she runs his or her finger along the partially covered adhesive tape to apply pressure, which causes the tape to exhibit its adhesion and allows the bag to be resealed. The bag can be repeatedly reopened (re-released) and resealed (re-stuck) as needed, which prevents any drop in the quality of the contents after the bag has been opened.

When the contents are removed with the fingers, the partially covered adhesive tape does not feel sticky to the touch, and this makes the tape much more convenient to use for the consumer.

### INDUSTRIAL APPLICABILITY

The present invention involves providing a protective material to a face side coated with an adhesive, and suitably adjusting the spaces obtained by multiplying the surface area of the adhesive sections by the thickness (distance) of the protective material. This allows repeated adhesion and peeling. Also, because of these spaces, the tape having the partially covered adhesive face does not feel sticky, and is also easy to mechanically attached to a packaging bag. Furthermore, if the adhesive agent or the face coated with the adhesive agent is colored, the user can tell the extent of sealing.

## Claims

1. An adhesive sheet capable of repeated adhesion and release, wherein a non-adhesive protective material layer is provided to a substrate surface on a side coated with an adhesive agent so that spaces obtained by multiplying the surface area of adhesive sections by the thickness of the protective material are regulated.

2. The adhesive sheet capable of repeated adhesion and release according to Claim 1, wherein the face side coated with the adhesive agent is colored, making it possible to confirm adhesion through an article to which the adhesive sheet is to be adhered.
